# DEMANDE DE BREVET EUROPEEN

(11) **EP 2 846 080 A1**
(43) Date de publication de la demande: **11.03.2015**
(21) Numéro de dépôt: 14183833.4
(22) Date de dépôt: 05.09.2014
(51) Int. Cl.: F21S 8/10, G02B 6/00

(54) **Guide de lumiere pour dispositif d'eclairage et/ou de signalisation lumineuse pour vehicule automobile**

(30) Priorité: 05.09.2013 FR 1358500
(71) Demandeur: VALEO VISION, 93012 Bobigny Cedex (FR)
(72) Inventeur: SAGNA, Boubacar, 78500 SARTROUVILLE (FR)

(57) **Abrégé**

L'invention a trait à un guide de lumière (4 ; 6) en matière transparente, comprenant une nappe (8 ; 18) apte à guider la lumière, avec au moins une face de découplage (10) par réflexion apte à faire sortir transversalement de la lumière, une nervure (12, 22) généralement transversale à la première portion avec une face d'entrée (14 ; 24) de la lumière sur sa tranche et une face de renvoi apte à réfléchir les rayons de la nervure vers la nappe (8). La nervure (12 ; 22) comprend au moins une fente (34 ; 36) généralement transversale formant un dioptre apte à canaliser dans l'étendue de la nervure la transmission de lumière depuis la face d'entrée (12 ; 22) vers la nappe (8 ; 18).

## Description

L'invention a trait au domaine des dispositifs d'émission de lumière, notamment pour véhicule automobile, par exemple des projecteurs, des feux ou des plafonniers.

Dans le domaine de l'éclairage de la route, de l'éclairage intérieur et de la signalisation de véhicules automobiles, il est de plus en plus fréquent d'utiliser des guides de lumière ou guides optiques. En effet, les guides de lumière présentent l'avantage de pouvoir prendre des formes géométriques très variées et d'amener une surface éclairante même dans des zones peu accessibles du dispositif d'éclairage et/ou de signalisation, contribuant ainsi au style du dispositif.

Par guide optique ou guide de lumière, on vise dans la présente demande une pièce transparente ou translucide à l'intérieur de laquelle des rayons lumineux se propagent de manière contrôlée depuis une des extrémités du guide, appelée face d'entrée jusqu'à au moins une face de sortie. La propagation de manière contrôlée s'effectue généralement par des réflexions internes successives sur diverses faces, appelées faces de réflexion interne ou dioptre de guidage. Concrètement, à proximité de la face d'entrée, est disposée au moins une source lumineuse, par exemple une source lumineuse de petite taille, telle qu'une diode électroluminescente. Les rayons lumineux émis par cette source vont se propager dans le guide optique vers la face opposée à la face d'entrée, appelée face terminale, par l'intermédiaire de faces de réflexion interne, situées entre la face d'entrée et la face terminale.

Dans certains guides de lumière, les faces de réflexion interne peuvent renvoyer la lumière en direction d'une face de sortie autre que la face terminale, de telle manière qu'un observateur a alors l'impression que ladite face de sortie est éclairée et que cette face de sortie correspond à une source lumineuse. C'est notamment le cas dans le document de brevet US 7,493,010 B1 qui divulgue un guide de lumière en forme de nappe avec un profil étagé. Une des surfaces principales de la nappe comprend des faces de découplage par réflexion, inclinées et configurées pour réfléchir vers la surface principale opposée une partie des rayons transmis dans la nappe. Les faces de découplage sont configurées pour produire une impression d'éclairage uniforme sur l'étendue de la nappe.

Le document de brevet publié DE 102 42 170 A1 divulgue un guide de lumière notamment pour interrupteur électrique. Il comprend une nappe et deux nervures latérales destinées à collecter de la lumière de sources lumineuses disposées latéralement. La lumière est émise par les sources essentiellement dans une direction généralement perpendiculaire à la nappe, lesdites sources étant disposées en vis-à-vis des tranches respectives des nervures. Le guide comprend deux surfaces de renvoi par réflexion disposées entre les nervures et la nappe, de manière à renvoyer les rayons transmis par la nervure vers la nappe. Cette dernière comprend sur une de ses surfaces principales des faces de découplage étagées aptes à faire sortir progressivement les rayons au travers de sa surface principale opposée.

En fonction de la configuration d'un guide de lumière, notamment sous forme de nappe, certaines zones peuvent s'avérer être déficitaires en lumière par rapport à d'autres. C'est notamment le cas lorsque la nervure et/ou les faces de découplage décrivent une courbe. Or il est souhaitable d'atteindre un certain niveau d'homogénéité d'éclairage.

L'invention a pour objectif de proposer un guide de lumière palliant un des inconvénients de l'art antérieur. Plus particulièrement, l'invention a pour objectif de proposer une solution au problème d'inhomogénéité lumineuse le long d'un guide de lumière en forme de nappe.

L'invention a pour objet un guide de lumière en matière transparente, comprenant: une nappe apte à guider la lumière par réflexions internes successives le long de ladite nappe; une nervure apte à guider la lumière par réflexions internes successives le long de ladite nervure et formant un angle avec la nappe, avec sur la tranche de ladite nervure une face d'entrée de la lumière; une face de renvoi apte à réfléchir les rayons se propageant dans la nervure vers la nappe; remarquable en ce que la nervure comprend au moins une fente s'étendant entre la face d'entrée et la nappe, ladite fente formant un dioptre apte à canaliser dans l'étendue de la nervure la transmission de lumière depuis la face d'entrée vers la nappe.

La nappe de guidage, est un guide dont l'épaisseur est faible au regard de sa longueur et de sa largeur. Elle peut être incurvée et présenter un galbe donné. Ainsi la nappe présente deux faces étendues séparée par un pourtour, ce pourtour définissant une épaisseur de la nappe, qui peut être variable, par exemple diminuant d'une extrémité à l'autre. Ces faces étendues forment des faces de guidage délimitant une zone de propagation des rayons lumineux, par réflexion interne sur ces faces.

Selon un mode avantageux de l'invention, la nervure comprend deux fentes s'étendant entre la face d'entrée et la nappe et formant deux dioptres aptes à canaliser entre les deux dioptres et dans l'étendue des nervures la transmission de lumière depuis la face d'entrée vers la nappe.

Selon un mode avantageux de l'invention, la ou au moins une desdites fentes s'étend sur plus de 50% de la hauteur de la nervure, préférentiellement depuis la face d'entrée et/ou jusqu'à la nappe. Ceci permettant d'améliorer le guidage des rayons jusqu'à la nappe au niveau de la portion comprenant la fente.

Selon un mode avantageux de l'invention, la nervure forme un angle moyen avec la nappe compris entre 85° et 140°, la nervure étant préférentiellement essentiellement perpendiculaire à la nappe.

Selon un mode avantageux de l'invention, l'épaisseur de la nappe diminue avec la distance par rapport à la nervure, la diminution d'épaisseur étant étagée. Cet étagement peut par exemple être réalisé par des décrochements réalisés chacun par une face permettant de réfléchir les rayons qui la rencontrent de manière à ce que ces rayons sortent de la nappe.

Selon un mode avantageux de l'invention, la nappe présente une forme générale arrondie et/ou droite et/ou encore polygonale au droit de la ou d'au moins une desdites fentes. La fente permet ainsi aux rayons d'être canalisés vers la nappe et de leur éviter de s'échapper du guide au niveau de l'arrondi. Ainsi on peut réaliser des guides avec des courbures marquées sans perdre beaucoup de rayons lumineux et préserver ainsi un aspect homogène sur le guide. La fente est ainsi délimitée par deux portions de nervure qui peuvent être coudées ou droite.

Selon un mode avantageux de l'invention, la nappe comprend au moins une face de découplage par réflexion apte à faire sortir transversalement de la lumière. La nappe peut comprendre au moins trois faces de découplage s'étendant parallèlement l'une à l'autre. Ces faces de découplage peuvent être lisses ou comprendre des facettes. Elles sont généralement inclinées par rapport à l'étendue de la nappe.

Selon un mode avantageux de l'invention, l'épaisseur de la nappe diminue avec la distance par rapport à la nervure, la diminution d'épaisseur étant étagée et correspondant, au moins partiellement, à la ou aux faces de découplage.

Selon un mode avantageux de l'invention, la ou les faces de découplage de la nappe s'étendent le long de la nervure, ladite ou lesdites faces décrivant au droit de la ou des fentes des changements de direction de plus de 30°, préférentiellement 40°, plus préférentiellement 50°, plus préférentiellement encore 60°.

Selon un mode avantageux de l'invention, la nappe et la nervure se joignent selon une zone de jonction décrivant au moins une courbe de rayon moyen inférieur à 40mm, préférentiellement 30mm, plus préférentiellement 20mm, la nervure comprenant une fente de chaque côté de la courbe de manière à canaliser la lumière rentrant par la face d'entrée, vers la zone de la nappe comprenant la zone de jonction.

Selon un mode avantageux de l'invention, la ou les faces de découplage de la nappe et la nervure s'étendent suivant un profil convexe. Ce profil convexe peut être de forme générale en U par exemple avec deux courbes de rayon moyen inférieur à 40mm, préférentiellement 30mm, plus préférentiellement 20mm, ladite nervure comprenant une desdites fentes de chaque côté de chaque courbe.

Selon un mode avantageux de l'invention, le guide comprend au moins une source de lumière disposée en vis-à-vis de la face d'entrée de la nervure, entre les deux fentes au droit de chacune des courbes de la nervure. Cela permet d'augmenter la luminosité de la zone de la nappe en regard des fentes de la nervure. Par ce gain d'efficacité du cheminement de la lumière de la face d'entrée de la nervure vers la zone de la nappe en regard des fentes, on minimise le flux optique nécessaire pour réaliser la fonction optique tout en améliorant l'homogénéité de l'aspect visuel. Il est à noter que la ou les sources éclairant les portions de nervure courbées peuvent être alimentées de manière à délivrer un flux différent des autres sources, adapté à la surface de la nappe à éclairer au moyen de ces sources. En particulier ce flux peut être supérieur à celui des sources lumineuses éclairant les autres portions.

Selon un mode avantageux de l'invention, la ou les faces de découplage de la nappe contournent une extrémité de la nervure, la ou les fentes étant situées à ladite extrémité de manière à canaliser la lumière rentrant par la face d'entrée, vers la zone de la nappe contournant ladite extrémité.

Selon un mode avantageux de l'invention, la nervure comprend deux fentes jointives à l'un de leurs bouts.

Selon un mode avantageux de l'invention, le guide comprend au moins une source de lumière disposée en vis-à-vis de la face d'entrée de la nervure, entre la ou les fentes et l'extrémité.

Selon un mode avantageux de l'invention, le guide de lumière est constitué de plusieurs éléments assemblés notamment au niveau de la fente ou d'une des fentes, par exemple à la base de la fente, la ou les fentes étant ainsi à la jonction de ces éléments assemblés. Cela permet de s'affranchir des éventuelles difficultés de réalisation de la ou des fentes.

L'invention a également pour objet un module d'émission de lumière, notamment pour véhicule automobile, comprenant: au moins un guide de lumière avec une face d'entrée, au moins une source lumineuse disposée en vis-à-vis de la face d'entrée, et remarquable en ce que le guide lumière est conforme à l'invention.

Les sources lumineuses sont préférentiellement des sources lumineuses ponctuelles du type diode à électroluminescence, réparties de manière essentiellement homogène le long de la face d'entrée de la nervure.

Selon un mode avantageux de l'invention, le guide de lumière est un premier guide de lumière assurant une première fonction, et il comprend un deuxième guide de lumière conforme à l'invention et assurant une deuxième fonction.

Par exemple :
- le premier guide de lumière peut être tel que précédemment décrit avec la nappe et la nervure se joignant selon une zone de jonction décrivant au moins une courbe de rayon moyen inférieur à 40mm, préférentiellement 30mm, plus préférentiellement 20mm, la nervure comprenant une desdites fentes de chaque côté de la courbure de manière à canaliser la lumière rentrant par la face d'entrée, vers la zone de la nappe comprenant la zone de jonction, et/ou
- le deuxième guide de lumière peut être tel que précédemment décrit avec la ou les faces de découplage de la nappe contournent une extrémité de la nervure, la ou lesdites fentes étant situées à ladite extrémité de manière à canaliser la lumière rentrant par la face d'entrée, vers la zone de la nappe contournant ladite extrémité.

La première fonction peut être une double fonction lanterne et stop, la deuxième fonction peut quant à elle être une fonction d'indication de direction (clignotant). Il peut ainsi s'intégrer dans un feu de signalisation arrière.

Ceci n'est pas limitatif. D'une manière générale l'invention vise également un dispositif lumineux de véhicule comprenant un module d'éclairage de la route, un module de signalisation, ou un module d'éclairage de l'intérieur de l'habitacle du véhicule. Par exemple, le dispositif peut être :
- un projecteur avec un module d'éclairage de la route selon l'invention et/ou un module de signalisation selon l'invention,
- un feu arrière de signalisation comprenant un module de signalisation selon l'invention,
- un plafonnier ou une applique à l'intérieur de l'habitacle comprenant un module d'éclairage intérieur selon l'invention.

Selon un mode avantageux de l'invention la nappe du premier guide comprend une ouverture où est logé le deuxième guide.

Les mesures de l'invention sont intéressantes en ce qu'elles permettent de pallier des difficultés de transmission de lumière à certaines zones de la nappe. Les origines de ces difficultés de transmission peuvent être de diverses natures. A titre d'exemple, la forme de la nappe, plus particulièrement des faces de découplage, peut être plus étendue à certains endroits, nécessitant davantage de puissance lumineuse. C'est notamment le cas lorsque les faces de découplage décrivent des courbes. Encore à titre d'exemple, la nervure peut décrire une courbe, ce qui peut réduire sa capacité de transmission, une partie des rayons pouvant sortir de la nervure avant d'atteindre la nappe.

D'autres caractéristiques et avantages de la présente invention seront mieux compris à l'aide de la description et des dessins parmi lesquels :
- La figure 1 est une vue en perspective d'un module de signalisation comprenant deux guides de lumière conformes à l'invention ;
- La figure 2 est une vue latérale du module de la figure 1, illustrant le principe de fonctionnement optique ;
- La figure 3 est une vue de détail de la partie du premier guide de lumière 4 du module des figures 1 et 2, présentant au niveau de la nervure des fentes conformément à l'invention ;
- La figure 4 est une autre vue de détail de la partie de guide de la figure 3 ;
- La figure 5 est une vue de détail de la partie du deuxième guide de lumière 6 du module des figures 1 et 2, présentant au niveau de la nervure des fentes conformément à l'invention ;
- La figure 6 est une autre vue de détail de la partie de guide de la figure 5 ;
- La figure 7 est une vue de détail du module des figures 1 et 2, montrant les fentes conformément à l'invention.

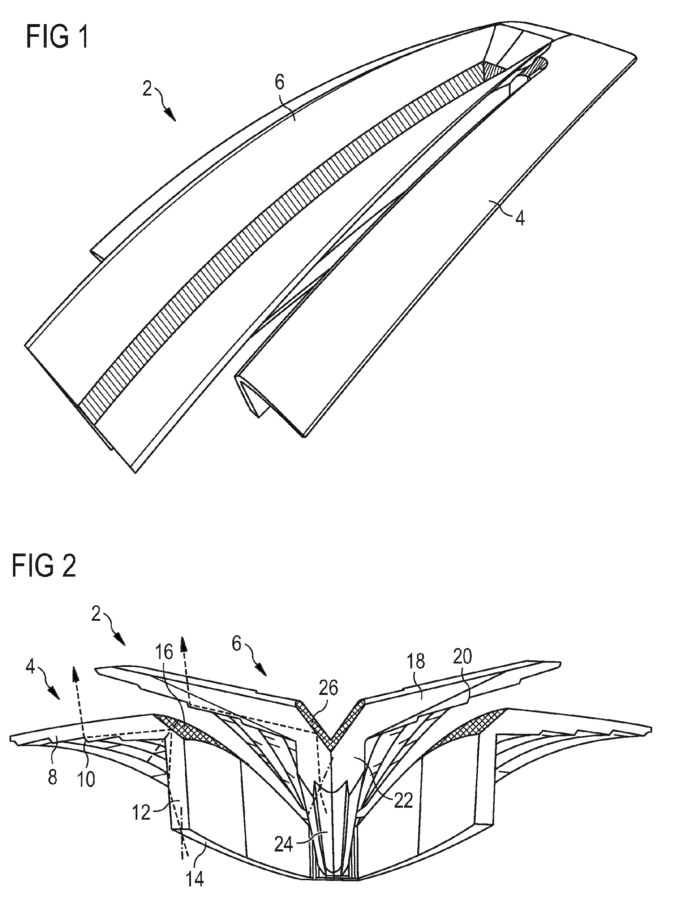

La figure 1 est une illustration en perspective d'un module de signalisation lumineuse pour véhicule automobile. En l'occurrence, le module 2 est destiné à être monté à l'arrière d'un véhicule, le module comprenant un premier guide de lumière 4 assurant une fonction combinée de lanterne et de feux stop, et un deuxième guide de lumière 6 assurant une fonction d'indicateur de direction (clignotant). Les deux guides de lumières 4 et 6 sont du type à nappe, c'est-à-dire comprenant une portion étendue apte à générer un éclairage au travers de ladite portion. Dans le cas précis de la figure 1, le premier guide de lumière 4 présente une forme générale de U, le deuxième guide 6 étant disposé dans le creux du U. Les guides de lumière 4 et 6 vont être décrits en détail en relation avec les figures 2 à 7.

La figure 2 est une vue arrière du module de la figure 1, illustrant la construction des guides de lumière et leur principe de fonctionnement optique.

Le premier guide 4 comprend une nappe 8, c'est-à-dire une portion étendue et généralement mince, ladite nappe présentant des faces de découplage 10 par réflexion. Ces faces 10 sont généralement inclinées par rapport à la nappe et sont situées sur une des surfaces principales de la nappe. L'épaisseur de la nappe diminue progressivement à chaque à face de découplage 10 jusqu'à son bord libre. Les faces de découplage 10 forment ainsi sur la surface correspondante de la nappe un profil étagé, à la manière des marches d'un escalier. Elles peuvent être recouvertes d'un revêtement réfléchissant, bien connu en soi de l'homme de métier.

Le premier guide 4 comprend également une nervure 12 destinée à alimenter la nappe en lumière. La nervure s'étend essentiellement perpendiculairement à la nappe 8. Elle comprend une face d'entrée 14 destinée à recevoir les rayons lumineux de sources de lumière (non représentées) disposées le long de ladite face. La zone de liaison entre la nervure 12 et la nappe 8 comprend une face de renvoi 16 apte à réfléchir les rayons transmis le long de la nervure en direction de la nappe, vers la nappe, les rayons se voyant ainsi renvoyés suivant un angle proche d'un angle droit. La face de renvoi 16 peut être généralement lisse ou présenter des facettes. Elle est préférentiellement recouverte d'un revêtement réfléchissant, bien connu en soi de l'homme de métier.

La figure 2 illustre le parcours d'un rayon le long du premier guide de lumière 4. On peut observer que le rayon provenant d'une source de lumière (non représentée) disposée en vis-à-vis de la face d'entrée 14 se voit réfracté par le dioptre formé par ladite face. Il se propage ensuite selon une composante majoritaire dans la direction longitudinale de la nervure. Il subit une première réflexion sur le dioptre formé par une des surfaces latérales de la nervure 12, sur base du principe de réflexion totale. Il se propage ensuite vers la face de renvoi 16 et est réfléchi dans une direction dont la composante majoritaire est selon la direction longitudinale de la nappe 8, le rayon se propageant alors le long de la nappe jusqu'à rencontrer une face de découplage 10 pour alors être réfléchi dans une direction transversale à la nappe et en sortir, formant ainsi un faisceau lumineux.

Il est à noter que le parcours qui vient d'être décrit est un exemple de parcours possible, étant entendu que de nombreux autres parcours similaires sont possibles. A titre d'exemple, il est en effet possible que des rayons se propageant dans la nervure 12 n'y subissent aucune réflexion ou encore qu'ils y subissent un nombre de réflexion supérieur à 1. Similairement, il est possible que des rayons se propageant dans la nappe après réflexion sur la face de renvoi subissent une ou plusieurs réflexions dans la nappe 8 avant de rencontrer une face de découplage.

La description qui vient d'être faite en relation avec la portion gauche du guide de lumière 4 de la figure 2 est également valable pour la portion droite, ainsi que pour la portion intermédiaire reliant les portions droite et gauche. En relation avec la représentation de la figure 1, le premier guide de lumière 4 présente en effet une forme généralement symétrique en forme de U.

Le deuxième guide de lumière 6 présente une forme plus compacte que le premier guide 4. Il comprend, similairement au premier guide 4, une nappe 18 s'étendant également en forme de U (voir figure 1) et pourvue de faces de découplage 20 par réflexion. Similairement à la nappe du premier guide, la nappe 18 du deuxième guide 6 présente une épaisseur qui diminue progressivement vers son bord libre, les diminutions progressives d'épaisseur correspondant aux faces de découplage 20. Comme cela est visible à la figure 1, la nappe 18 du deuxième guide 6 s'étend en forme de U.

Le deuxième guide de lumière 6 comprend également une nervure 22, similairement au premier guide, destinée à alimenter la nappe en lumière. A la différence du premier guide, la nervure ne s'étend pas suivant un contour similairement à celui de la nappe. En effet, la nervure 22 est ici centrale et s'étend de manière commune le long des deux portions latérales de nappe 18. La nervure 22 comprend une face d'entrée 24 de la lumière provenant de sources lumineuses (non représentées) distribuées le long de ladite face. Cette face présente la particularité de présenter un profil, en section transversale, formant une cavité apte à assurer un rôle de collimateur des rayons émis par les sources lumineuses. Ce type de profil est bien connu en soi de l'homme de métier.

Le deuxième guide 6 comprend également une face de renvoi 26, ladite face présentant un profil général en forme de V. La face de renvoi 26 peut être généralement lisse ou présenter des facettes. Elle peut être recouverte d'un revêtement réfléchissant, bien connu en soi de l'homme de métier.

La figure 2 illustre le parcours d'un rayon le long du deuxième guide de lumière 6. On peut observer que le rayon provenant d'une source de lumière (non représentée) disposée en vis-à-vis de la face d'entrée 24 se voit réfracté par le dioptre formé par ladite face. Il se propage ensuite selon une composante majoritaire dans la direction longitudinale de la nervure. Il est réfléchi par la face de renvoi 26 pour ensuite se propager dans une direction dont la composante majoritaire est selon la direction longitudinale de la nappe 18, le rayon se propageant alors le long de la nappe jusqu'à rencontrer une face de découplage 20 pour alors être réfléchi dans une direction transversale à la nappe et en sortir, formant ainsi un faisceau lumineux.

Similairement à ce qui a été mentionné précédemment en relation avec le premier guide de lumière, les rayons se propageant dans le deuxième guide et participant à la formation du faisceau lumineux peuvent suivre des parcours différents de celui qui est illustré qui vient d'être décrit, en particulier ils peuvent se réfléchir une ou plusieurs fois sur les faces latérales de la nervure 22.

Similairement à ce qui a été mentionné précédemment en relation avec le premier guide de lumière, la description qui vient d'être faite en relation avec la portion gauche du guide de lumière 6 de la figure 2 est également valable pour la portion droite.

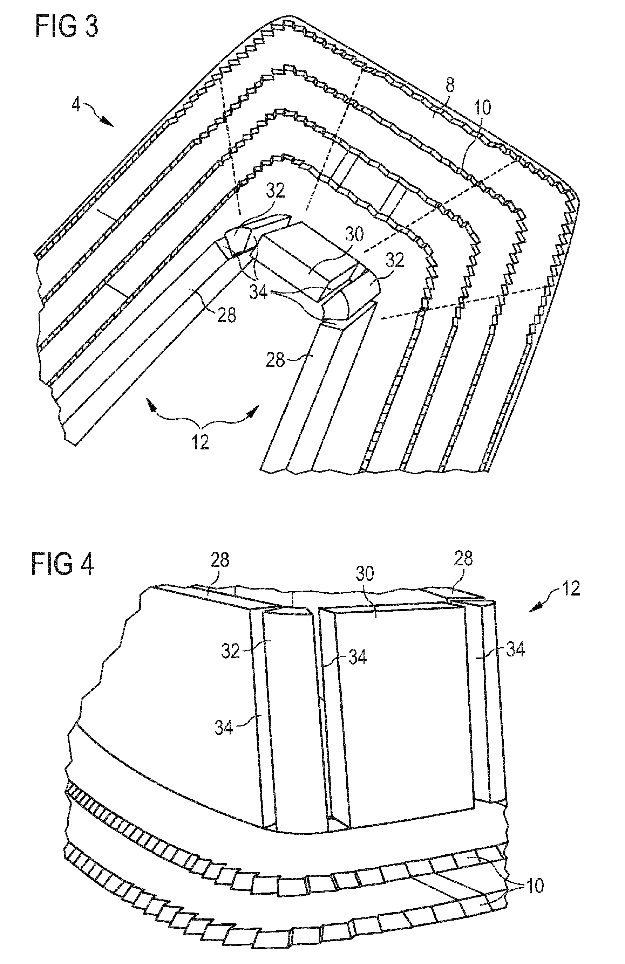

Les figures 3 et 4 illustrent, sous différents angles de vue, la portion coudée du premier guide de lumière 4.

La figure 3 montre la portion du premier guide correspondant à la base du U qui caractérise son profil général. On peut observer que la nappe 8, ses faces de découplage 10 et la nervure 12 s'étendent suivant un parcours coudé, en l'occurrence double coudé. La nervure 12 présente des fentes 34 au niveau des portions coudées, plus précisément une fente de chaque côté de chaque portion coudée. Les fentes s'étendent sur plus de 50% de la hauteur de la nervure, préférentiellement depuis la face d'entrée 14 et/ou jusqu'à la nappe 8. Elles s'étendent préférentiellement de manière continue depuis la face d'entrée 14 jusqu'à la nappe 8. Ces fentes permettent d'isoler les portions coudées 32 de la nervure 12 des portions généralement droites 30 ou légèrement arquées 28. La lumière pénétrant les portions ainsi isolées 32 va alors se propager dans le long de ladite portion, par réflexions successives par application du principe de réflexion totale, jusqu'à atteindre la nappe. Ces portions de nervures forment ainsi des guides de lumière qui permettent de créer des sources de lumière secondaires au niveau de la nappe 8, à hauteur des portions coudées.

Il est intéressant de noter que les portions coudées de la nervure doivent alimenter en lumière une portion de nappe proportionnellement plus importante que les portions non coudées. Cette situation est illustrée par les traits pointillés aux deux zones coudées qui montrent l'étendue des portions de nappe qui sont concernées par les portions coudées 32 de la nervure. De plus, la nature courbée de la nervure tend à rendre plus difficile la propagation de lumière vers la nappe, générant ainsi une difficulté supplémentaire.

La présence des fentes 34 permet ainsi de s'assurer d'une transmission optimale de lumière vers ces zones susceptibles de présenter des niveaux lumineux plus faible ainsi que des inhomogénéités. Il est ainsi possible de prévoir une ou plusieurs sources lumineuses en vis-à-vis de la ou de chacune des portions de nervure coudées 32 de manière à les alimenter en lumière spécifique.

La figure 4 illustre de manière plus détaillée une des deux portions de nervure coudées 32. Les rayons rentrant dans la dite portion par la face d'entrée 14 se propagent dans le guide par réflexions successives en vertu du principe de réflexion totale. En effet, en optique géométrique, le phénomène de réflexion totale survient lorsqu'un rayon lumineux se propageant dans un milieu d'un premier indice optique arrive sur la surface séparant ce milieu d'un autre milieu d'un deuxième indice optique inférieur au premier indice optique avec un angle d'incidence supérieur à une valeur critique. Dans ce cas, il n'y a alors plus de rayon réfracté transmis et seul subsiste un rayon réfléchi. Il n'est donc pas nécessaire de recouvrir les faces de la dite portion de nervure 32 formées par les fentes d'une matière réfléchissante.

Les fentes peuvent présenter des largeurs faibles, notamment comprises entre 0.1 mm et 10mm, préférentiellement entre 0.2mm et 5mm, préférentiellement plus de 2 ou 3mm. Elles peuvent présenter une largeur qui augmente avec l'éloignement de la nappe, formant ainsi un angle de dépouille favorisant le démoulage. Il est à noter que cette dépouille est favorable au guidage de la lumière vers la zone voulue. En effet un nombre plus grand de rayons impactent la surface de séparation avec un angle supérieur à l'angle critique et subissent ainsi une réflexion totale.

Les fentes sont préférentiellement généralement perpendiculaires à la nappe. Elles peuvent toutefois également présenter une inclinaison. En effet, notamment pour des raisons d'encombrement, la mise en place de source(s) de lumière au droit des portions de nappe à éclairer peut s'avérer problématique. Dans ce cas, il est envisageable de prévoir des fentes inclinées permettant de transmettre de la lumière depuis une source lumineuse vers une zone décalée de la nappe.

L'exemple de réalisation du premier guide de lumière 4 tel qu'illustré aux figures 3 et 4 prévoit quatre fentes, à savoir deux fentes par portion coudée. Il est à noter qu'il est également possible de ne prévoir que deux fentes, de part et d'autre de la portion centrale et des portions coudées. La zone de la nappe située au niveau de la portion droite 30 pourrait toutefois être trop illuminée par rapport aux zones de coudes (traits pointillés à la figure 3).

Il est à noter que la ou les sources éclairant les portions de nervure courbées peuvent être alimentées de manière à délivrer un flux différent des autres sources, adapté à la surface de la nappe à éclairer au moyen de ces sources. En particulier ce flux peut être supérieur à celui des sources lumineuses éclairant les autres portions.

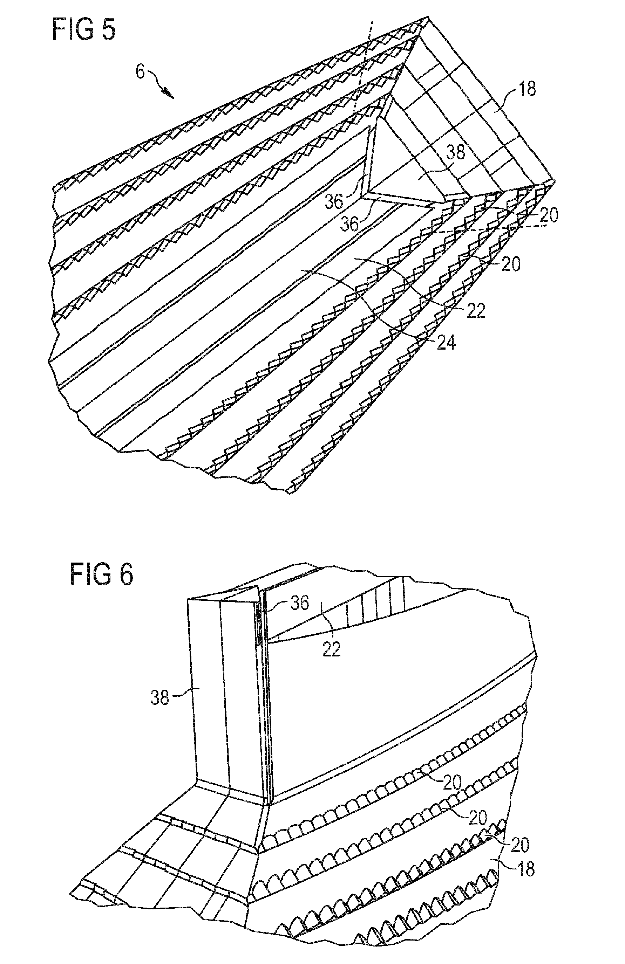

Les figures 5 et 6 illustrent sous différents angles de vue la portion coudée du deuxième guide de lumière 6.

Comme cela est visible à la figure 5, la nappe 18 et ses faces de découplage 20 s'étendent suivant un parcours également en forme de U, similairement au premier guide de lumière 4. Les faces de découplage 20 suivent toutefois des changements de direction davantage anguleux que dans le premier guide. La nervure 22 s'étend de manière essentiellement rectiligne au centre entre les portions longitudinales de la nappe 18.

La nervure 22 comprend à son extrémité deux fentes 36 de profil général en V, dont l'ouverture est dirigée dans le prolongement de l'extrémité de la nervure. La présence de ces fentes 36 a pour conséquence de former une portion de nervure 38 isolée optiquement du reste de la nervure. Elle constitue en effet un guide de lumière en tant que tel, apte à canaliser la lumière reçue par sa face d'entrée vers la nappe à hauteur de ladite portion, plus particulièrement vers la portion de nappe délimitée par les traits pointillés. Similairement aux fentes de la nervure du premier guide de lumière, les fentes 36 forment un dioptre apte à guider les rayons par réflexions successives, sur base du principe de réflexion totale.

En l'occurrence, une portion de nervure 38 présente une section triangulaire, étant entendu qu'elle peut présenter d'autres sections, par exemple de forme arrondie. La face d'entrée de cette portion peut être plane ou présenter un profil. Dans ce cas précis, les figures 5 et 6 montrent bien que la face d'entrée de la portion 38 est plane, contrairement à la face d'entrée du reste de la nervure qui présente le profil visible à la figure 2.

Les remarques faites en relation avec le premier guide de lumière en ce qui concerne la forme, les dimensions et les surfaces de fentes sont également valables pour ce deuxième guide de lumière.

Similairement au premier guide de lumière, une ou plusieurs sources de lumière peuvent être disposées en face de la portion de nervure isolée de manière à lui réserver l'énergie lumineuse nécessaire pour assurer l'éclairement des zones de la nappe situées à hauteur de la portion de nervure en question. Il est à noter que la ou les sources éclairant la portion de nervure isolée peuvent être alimentées de manière à délivrer un flux différent des autres sources, adapté à la surface de la nappe à éclairer au moyen de ces sources. En particulier ce flux peut être supérieur à celui des sources lumineuses éclairant les autres portions.

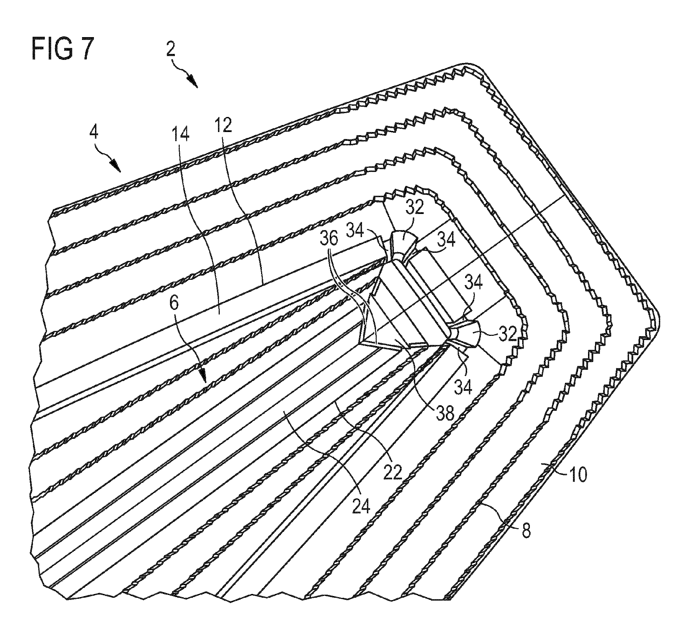

La figure 7 illustre la face arrière du module 2 de la figure 1, montrant la réunion des deux guides de lumière 4 et 6. On peut bien y observer la position des fentes 34 et 36 sur les nervures des guides respectifs.

Les guides de lumière 4 et 6 qui viennent d'être décrits présentent l'avantage d'être transparents, à savoir que leurs nappes respectives sont transparentes en l'absence de lumière émise par les sources lumineuses respectives. Dés que les sources lumineuses d'un guide sont allumées, des bandes ou lignes éclairées apparaissent sur la nappe, selon les contours des faces de découplage.

Un tel module est intéressant notamment lorsque plusieurs guides sont combinés, ce qui implique très souvent à ceux-ci de suivre des contours avec des courbes. Les mesures de l'invention permettent de pallier les problèmes de transmission lumineuse déficitaire dans les zones correspondant à ces courbes.

De manière générale, les guides de lumière peuvent être réalisés en matériau plastique comme du polycarbonate (couramment appelé PC) ou encore du polyméthacrylate de méthyle (couramment appelé PMMA). Ils peuvent être réalisés par injection plastique dans un moule. La ou les fentes peuvent être réalisées par enlèvement de matière ou directement lors du moulage.

Toujours de manière générale, la ou les fentes se situent préférentiellement sur la ou les nervures à hauteur de changements de direction de la nervure et/ou des faces de découplage de plus de 30°, préférentiellement 40°, plus préférentiellement 50°, plus préférentiellement encore 60°.

## Revendications

1. Guide de lumière (4 ; 6) en matière transparente, comprenant :
- une nappe (8 ; 18) apte à guider la lumière par réflexions internes successives le long de ladite nappe ;
- une nervure (12 ; 22) apte à guider la lumière par réflexions internes successives le long de ladite nervure, et formant un angle avec la nappe, avec sur sa tranche une face d'entrée (14 ; 24) de la lumière ;
- une face de renvoi (16 ; 26) apte à réfléchir les rayons se propageant dans la nervure vers la nappe (8, 18) ;
**caractérisé en ce que**
la nervure (12 ; 22) comprend au moins une fente (34 ; 36) s'étendant entre la face d'entrée et la nappe, ladite fente formant un dioptre apte à canaliser dans l'étendue de la nervure la transmission de lumière depuis la face d'entrée (14 ; 24) vers la nappe (8 ; 18).

2. Guide de lumière (4 ; 6) selon la revendication 1, **caractérisé en ce que** la nervure (12, 22) comprend deux fentes (34 ; 36) s'étendant entre la face d'entrée et la nappe formant deux dioptres aptes à canaliser entre les deux dioptres et dans l'étendue de la nervure la transmission de lumière depuis la face d'entrée (14 ; 24) vers la nappe (8 ; 18).

3. Guide de lumière (4 ; 6) selon l'une des revendications 1 et 2, **caractérisé en ce que** la ou au moins une desdites fentes (34 ; 36) s'étend sur plus de 50% de la hauteur de la nervure (12, 22), préférentiellement depuis la face d'entrée (14 ; 24) et/ou jusqu'à la nappe (8 ; 18).

4. Guide de lumière (4 ; 6) selon l'une des revendications 1 à 3, **caractérisé en ce que** la nervure (12, 22) forme un angle moyen avec la nappe compris entre 85° et 140°.

5. Guide de lumière (4 ; 6) selon l'une des revendications 1 à 4, **caractérisé en ce que** l'épaisseur de la nappe (8 ; 18) diminue avec la distance par rapport à la nervure (12, 22), la diminution d'épaisseur étant étagée.

6. Guide de lumière (4 ; 6) selon l'une des revendications 1 à 5, **caractérisé en ce que** la nappe (8 ; 18) présente une forme générale arrondie au droit de la ou d'au moins une desdites fentes (34 ; 36).

7. Guide de lumière (4 ; 6) selon l'une des revendications 1 à 6, **caractérisé en ce que** la nappe (8 ; 18) comprend au moins une face de découplage (10 ; 20) par réflexion apte à faire sortir transversalement de la lumière.

8. Guide de lumière (4 ; 6) selon la revendication 7, **caractérisé en ce que** la ou les faces de découplage (10 ; 20) de la nappe (8 ; 18) s'étendent le long de la nervure (12, 22), ladite ou lesdites faces de découplage (10 ; 20) décrivant au droit de la ou desdites fentes (34 ; 36) des changements de direction de plus de 30°, préférentiellement 40°, plus préférentiellement 50°, plus préférentiellement encore 60°.

9. Guide de lumière (4) selon l'une des revendications 1 à 8, **caractérisé en ce que** la nappe (8) et la nervure (12) se joignent selon une zone de jonction décrivant au moins une courbe de rayon moyen inférieur à 40mm, la nervure (12) comprenant une desdites fentes (34) de chaque côté de la courbure de manière à canaliser la lumière rentrant par la face d'entrée (14), vers la zone de la nappe (8) comprenant la zone de jonction.

10. Guide de lumière (4) selon l'une des revendications 1 à 9, **caractérisé en ce que** la nappe (8 ; 18) comprend au moins une face de découplage (10 ; 20), la ou les faces de découplage (10) de la nappe (8) et la nervure (12) s'étendant suivant un profil convexe.

11. Guide de lumière (4) selon la revendication précédente, **caractérisé en ce que** ledit profil convexe est de forme générale en U.

12. Guide de lumière (4) selon l'une des revendications 9 à 11, **caractérisé en ce qu'**il comprend au moins une source de lumière disposée en vis-à-vis de la face d'entrée (14) de la nervure (12), entre les deux fentes (34) au droit de chacune des courbes de la nervure (12).

13. Guide de lumière (6) selon l'une des revendications 1 à 12, **caractérisé en ce que** la ou les faces de découplage (20) de la nappe (18) contournent une extrémité de la nervure (22), la ou lesdites fentes (36) étant situées à ladite extrémité de manière à canaliser la lumière rentrant par la face d'entrée, vers la zone de la nappe (18) contournant ladite extrémité.

14. Guide de lumière (6) selon la revendication 13, **caractérisé en ce que** la nervure (22) comprend deux fentes (36) jointives à l'un de leurs bouts.

15. Guide de lumière selon l'une des revendications 13 et 14, **caractérisé en ce qu'**il comprend au moins une source de lumière disposée en vis-à-vis de la face d'entrée de la nervure (22), entre la ou les fentes (36) et l'extrémité.

16. Module d'émission de lumière (2), notamment pour véhicule automobile, comprenant :
- au moins un guide de lumière (4 ; 6) avec une face d'entrée ;
- au moins une source lumineuse disposée en vis-à-vis de la face d'entée ;
**caractérisé en ce que** le guide lumière (4 ; 6) est conforme à l'une des revendications 1 à 15.

17. Module d'émission de lumière (2) selon la revendication 16, **caractérisé en ce que** le guide de lumière (4) est un premier guide de lumière assurant une première fonction, et **en ce qu'**il comprend un deuxième guide de lumière (6) conforme à l'une des revendications 1 à 15 et assurant une deuxième fonction.

18. Module d'émission de lumière (2) selon la revendication 17, **caractérisé en ce que** le premier guide de lumière (4) est conforme à l'une des revendications 9 à 12 et/ou le deuxième guide de lumière (6) est conforme à l'une des revendications 13 à 15.

19. Module d'émission de lumière (2) selon l'une des revendications 17 et 18, **caractérisé en ce que** la nappe (8) du premier guide de lumière (4) comprend une ouverture où est logé le deuxième guide (6).
